# EUROPEAN PATENT APPLICATION

(11) **EP 3 675 339 A1**
(43) Date of publication of application: **01.07.2020**
(21) Application number: 19210820.7
(22) Date of filing: 22.11.2019
(51) Int. Cl.: H02M 3/335, H02M 3/158, H02M 7/219, H02M 1/00, H02M 7/48

(54) **3-PHASE DUAL ACTIVE BRIDGE DC/DC CONVERTER WITH AUXILARY SECONDARY OUTPUT**

(30) Priority: 27.12.2018 JP 2018243839
(71) Applicant: YAZAKI CORPORATION, Minato-ku, Tokyo 108-8333 (JP)
(72) Inventor: YAMASAKI, Yoshihiro, Shizuoka, 410-1194 (JP)
(74) Representative: Grünecker Patent- und Rechtsanwälte PartG mbB

(57) **Abstract**

In a power conversion device (1), a main direct-current/direct-current (DC/DC) converter (40) includes a first three-phase circuit (41) capable of receiving and outputting a three-phase alternating current, a second three-phase circuit (42) capable of receiving and outputting a three-phase alternating current, and an isolation transformer (43). A sub-DC/DC converter (60) branches from the isolation transformer (43), and transforms a voltage of power supplied through the first three-phase circuit (41) or the second three-phase circuit (42). The isolation transformer (43) is provided between the first three-phase circuit (41) and the second three-phase circuit (42), and transforms the voltage of the power supplied through the first three-phase circuit (41) or the second three-phase circuit (42). The isolation transformer (43) includes three coil units (43a to 43c). The coil unit (43a) includes primary winding (L1a), main secondary winding (L2a), and sub secondary winding (L3a). The coil units (43a to 43c) are provided in the three phases, at least one for each phase.

## Description

### BACKGROUND OF THE INVENTION

### 1. Field of the Invention

The present invention relates to a power conversion device.

### 2. Description of the Related Art

Conventionally, for example, Japanese Patent No. 5577986 discloses an in-vehicle power supply device as a power conversion device. This in-vehicle power supply device is provided with a primary bridge circuit that outputs alternating-current (AC) power, a transformer that transforms the AC power output from the primary bridge circuit, a secondary bridge circuit that converts the AC power transformed by the transformer into direct-current (DC) power, and a voltage regulator circuit on the secondary side that regulates a voltage of the AC power transformed by the transformer. The transformer includes primary winding connected to the primary bridge circuit, first secondary winding connected to the secondary bridge circuit, and second secondary winding connected to the voltage regulator circuit on the secondary side.

The in-vehicle power supply device described in JP 5577986 B mentioned above supplies, for example, two kinds of power having different voltages, and thus, a ripple may occur in the power supplied to the voltage regulator circuit on the secondary side through the second secondary winding. This problem leaves room for further improvements.

### SUMMARY OF THE INVENTION

Accordingly, the present invention has been made in view of the above-described circumstances, and an object thereof is to provide a power conversion device capable of appropriately supplying a plurality of kinds of power having different voltages.

In order to solve the above mentioned problem and achieve the object, a power conversion device according to one aspect of the present invention includes a main DC/DC converter including a first three-phase circuit capable of receiving and outputting a three-phase alternating current, a second three-phase circuit capable of receiving and outputting a three-phase alternating current, and an isolation transformer provided between the first three-phase circuit and the second three-phase circuit, and configured to transform a voltage of power supplied through the first three-phase circuit or the second three-phase circuit; and a sub-DC/DC converter branching from the isolation transformer, and configured to transform the voltage of the power supplied through the first three-phase circuit or the second three-phase circuit, wherein the isolation transformer includes three coil units each having a primary winding connected to one of phases of the first three-phase circuit, a main secondary winding electromagnetically coupled to the primary winding, and connected to one of phases of the second three-phase circuit, and a sub secondary winding electromagnetically coupled to the primary winding or the main secondary winding, and connected to the sub-DC/DC converter, and the coil units are provided in the three phases, at least one for each phase.

According to another aspect of the present invention, in the power conversion device, it is preferable that the power conversion device includes an AC/DC circuit configured to output, to the main DC/DC converter, a direct current power converted from an alternating current power supplied from an alternating current power supply; and a power storage unit configured to store the direct current power transformed by the main DC/DC converter.

According to still another aspect of the present invention, in the power conversion device, it is preferable that the power conversion device includes a power storage unit configured to store a direct current power and supply the direct current power to the main DC/DC converter; and an inverter circuit configured to output, to a load unit, an alternating current power converted from the direct current power transformed by the main DC/DC converter.

According to still another aspect of the present invention, in the power conversion device, it is preferable that the power conversion device includes a controller configured to control the inverter circuit and the sub-DC/DC converter, wherein the controller is configured to limit output power output from the inverter circuit to the load unit based on a maximum value of the output power and an output value of the sub-DC/DC converter.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a circuit diagram illustrating a configuration example of a power conversion device according to an embodiment of the present invention;
FIG. 2 is a circuit diagram illustrating a charging example of the power conversion device according to the embodiment;
FIG. 3 is a circuit diagram illustrating an alternating-current (AC) power supply example of the power conversion device according to the embodiment;
FIG. 4 is a flowchart illustrating a power limitation example during the AC power supply according to the embodiment;
FIG. 5 is a flowchart illustrating a power limitation example during the AC power supply according to a modification of the embodiment;
FIG. 6 is a circuit diagram illustrating an isolation transformer (No. 1) according to the modification of the embodiment; and
FIG. 7 is a circuit diagram illustrating an isolation transformer (No. 2) according to the modification of the embodiment.

### DETAILED DESCRIPTION OF THE PREFERRED EMBODIMENTS

The following describes a mode (embodiment) for carrying out the present invention in detail with reference to the drawings. The present invention is not limited to the description of the embodiment to be given below. Components to be described below include those easily conceivable by those skilled in the art or those substantially identical thereto. Moreover, configurations to be described below can be combined as appropriate. Furthermore, the configurations can be variously omitted, replaced, or modified within the scope not deviating from the gist of the present invention.

### Embodiment

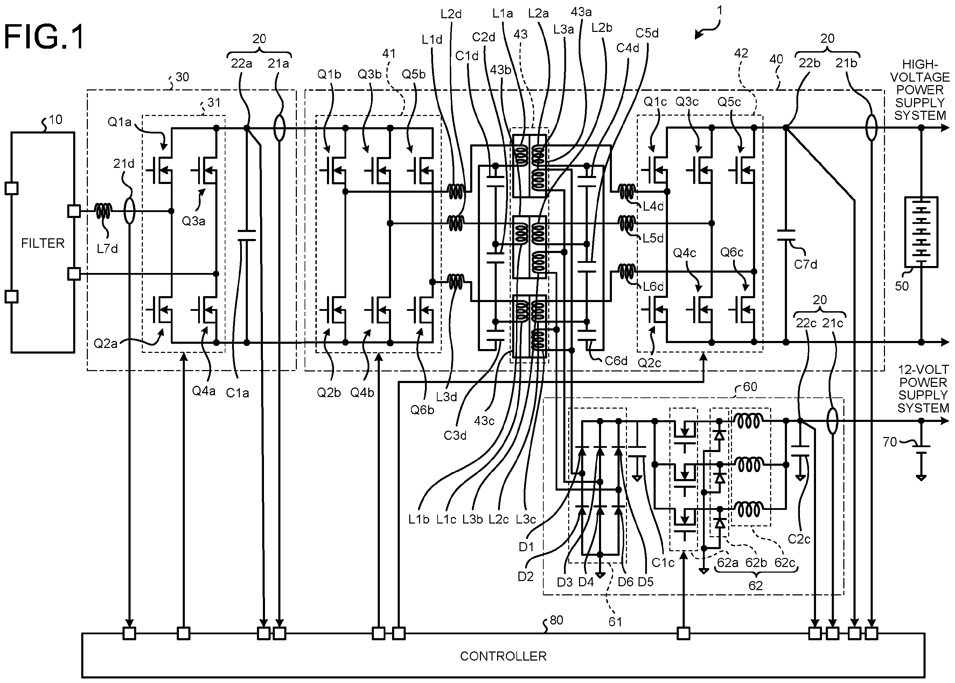

A power conversion device 1 according to the embodiment will be described with reference to the drawings. FIG. 1 is a circuit diagram illustrating a configuration example of the power conversion device 1 according to the embodiment. The power conversion device 1 is a device that is mounted on a vehicle and converts power. The power conversion device 1 is mounted on the vehicle, such as an electric vehicle (EV) or a plug-in hybrid vehicle (PHV), and charges a high-voltage battery 50 and a low-voltage battery 70 with direct-current (DC) power converted from alternating-current (AC) power supplied from an AC power supply 2 (charging process). The power conversion device 1 supplies AC power converted from the DC power supplied from the high-voltage battery 50 to a load unit 3 (AC supply process).

As illustrated in FIG. 1, the power conversion device 1 is provided with a filter 10, a detector 20, a conversion circuit 30 serving as an AC/DC circuit and an inverter circuit, a main DC/DC converter 40, the high-voltage battery 50 serving as a power storage unit, a sub-DC/DC converter 60, the low-voltage battery 70, and a controller 80.

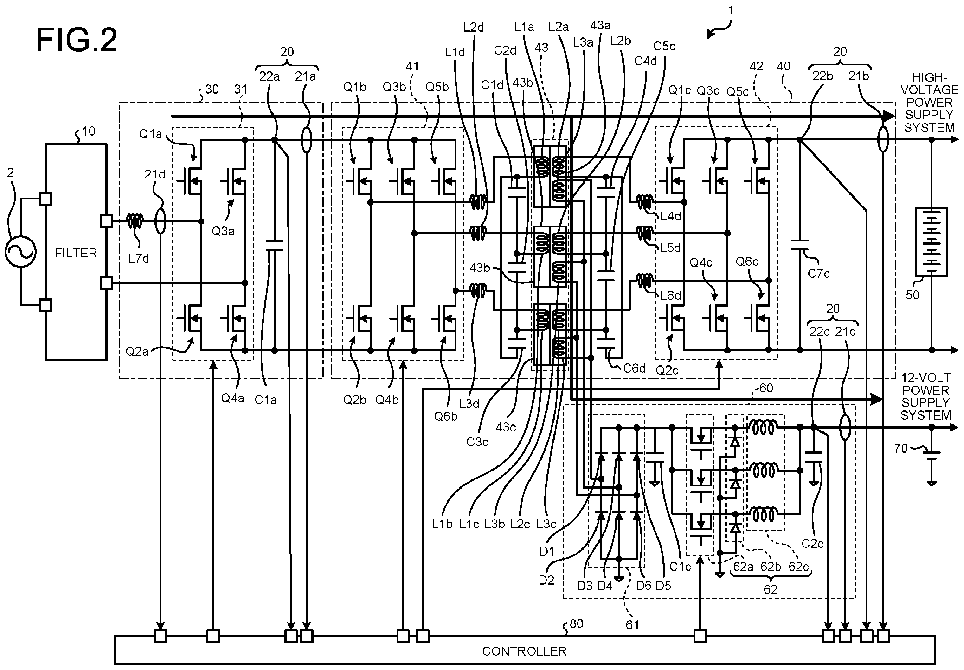

The filter 10 removes noise. The filter 10 is connected to the AC power supply 2 (refer to FIG. 2), and removes noise from the AC power supplied from the AC power supply 2 during the charging. The filter 10 is connected to the conversion circuit 30 through a coil L7d, and outputs the AC power having got rid of the noise to the conversion circuit 30. The filter 10 removes noise from the AC power supplied from the conversion circuit 30 during the AC power supply. The filter 10 outputs the AC power having got rid of the noise to the load unit 3.

The detector 20 detects currents and voltages. The detector 20 includes current sensors 21a to 21d and voltage sensors 22a to 22c. The current sensor 21d is provided between the filter 10 and a switching circuit 31 of the conversion circuit 30, and detects a current flowing between the filter 10 and the switching circuit 31 of the conversion circuit 30. The current sensor 21d is connected to the controller 80, and outputs the detected current to the controller 80.

The current sensor 21a is provided between the switching circuit 31 of the conversion circuit 30 and the main DC/DC converter 40. The current sensor 21a detects a current flowing between the switching circuit 31 of the conversion circuit 30 and the main DC/DC converter 40. The current sensor 21a is connected to the controller 80, and outputs the detected current to the controller 80.

The voltage sensor 22a is provided between the switching circuit 31 of the conversion circuit 30 and the main DC/DC converter 40. The voltage sensor 22a detects a voltage applied between the switching circuit 31 of the conversion circuit 30 and the main DC/DC converter 40. The voltage sensor 22a is connected to the controller 80, and outputs the detected voltage to the controller 80.

The current sensor 21b is provided between a second three-phase circuit 42 of the main DC/DC converter 40 and the high-voltage battery 50. The current sensor 21b detects a current flowing between the second three-phase circuit 42 of the main DC/DC converter 40 and the high-voltage battery 50. The current sensor 21b is connected to the controller 80, and outputs the detected current to the controller 80.

The voltage sensor 22b is provided between the second three-phase circuit 42 of the main DC/DC converter 40 and the high-voltage battery 50. The voltage sensor 22b detects a voltage applied between the second three-phase circuit 42 of the main DC/DC converter 40 and the high-voltage battery 50. The voltage sensor 22b is connected to the controller 80, and outputs the detected voltage to the controller 80.

The current sensor 21c is provided between a step-down circuit 62 of the sub-DC/DC converter 60 and the low-voltage battery 70. The current sensor 21c detects a current flowing between the step-down circuit 62 of the sub-DC/DC converter 60 and the low-voltage battery 70. The current sensor 21c is connected to the controller 80, and outputs the detected current to the controller 80.

The voltage sensor 22c is provided between the step-down circuit 62 of the sub-DC/DC converter 60 and the low-voltage battery 70. The voltage sensor 22c detects a voltage applied between the step-down circuit 62 of the sub-DC/DC converter 60 and the low-voltage battery 70. The voltage sensor 22c is connected to the controller 80, and outputs the detected voltage to the controller 80. As described above, the power conversion device 1 is provided with the current sensors 21a to 21d and the voltage sensors 22a to 22c, and thereby can control the current values, the voltage values, and power values within predetermined ranges, thus being capable of operating over a broad power range.

The conversion circuit 30 serves as the AC/DC circuit (power factor correction (PFC) circuit) during the charging, and serves as the inverter circuit during the AC power supply. In other words, the same conversion circuit 30 is used both as the AC/DC circuit and the inverter circuit. The conversion circuit 30 includes the switching circuit 31 and a capacitor C1a. The switching circuit 31 includes field-effect transistors (FETs) Q1a to Q4a. In the switching circuit 31, the FET Q1a and the FET Q2a are connected in series to form a first series circuit, and the FET Q3a and the FET Q4a are connected in series to form a second series circuit. In the switching circuit 31, the first series circuit is provided on the filter 10 side; the second series circuit is provided on the main DC/DC converter 40 side; and the first and second series circuits are connected in parallel. In the switching circuit 31, a terminal on one side of the filter 10 is connected to a line between the FET Q1a and the FET Q2a, and a terminal on another side of the filter 10 is connected to a line between the FET Q3a and the FET Q4a.

The switching circuit 31 is connected to the controller 80, and the controller 80 controls the FETs Q1a to Q4a. During the charging, the switching circuit 31 converts the AC power supplied through the filter 10 into DC power, and outputs the DC power to the main DC/DC converter 40. In contrast, during the AC power supply, the switching circuit 31 converts DC power output from the main DC/DC converter 40 into AC power, and outputs the AC power to the filter 10.

The capacitor C1a smoothes the DC power. The capacitor C1a is connected in parallel to the switching circuit 31, and smoothes DC power output from the switching circuit 31 during the charging. The capacitor C1a also smoothes the DC power supplied to the switching circuit 31 during the AC power supply.

The main DC/DC converter 40 converts the voltage of the DC power. The main DC/DC converter 40 includes a first three-phase circuit 41, the second three-phase circuit 42, an isolation transformer 43, resonance capacitors C1b to C6b, and resonance coils Lid to L6d.

The first three-phase circuit 41 is a half-bridge circuit capable of receiving and outputting a three-phase alternating current. The term "three-phase alternating current" refers to a combination of three alternating currents having current or voltage phases offset from one another by 120 degrees. The first three-phase circuit 41 includes FETs Q1b to Q6b. In the first three-phase circuit 41, the FET Q1b and the FET Q2b are connected in series to form a first series circuit; the FET Q3b and the FET Q4b are connected in series to form a second series circuit; and the FET Q5b and the FET Q6b are connected in series to form a third series circuit. In the first three-phase circuit 41, the first series circuit is provided on the conversion circuit 30 side; the third series circuit is provided on the isolation transformer 43 side; the second series circuit is provided between the first series circuit and the third series circuit; and the first, second, and third series circuits are connected in parallel.

The first three-phase circuit 41 is connected to the conversion circuit 30, the isolation transformer 43, and the controller 80. The controller 80 controls the FETs Q1b to Q6b of the first three-phase circuit 41 between on and off. During the charging, the first three-phase circuit 41 converts the DC power supplied through the conversion circuit 30 into AC power, and outputs the AC power to the isolation transformer 43. In contrast, during the AC power supply, the first three-phase circuit 41 converts AC power output from the isolation transformer 43 into DC power, and outputs the DC power to the conversion circuit 30.

The second three-phase circuit 42 is a half-bridge circuit capable of receiving and outputting a three-phase alternating current. The second three-phase circuit 42 includes FETs Q1c to Q6c. In the second three-phase circuit 42, the FET Q1c and the FET Q2c are connected in series to form a first series circuit; the FET Q3c and the FET Q4c are connected in series to form a second series circuit; and the FET Q5c and the FET Q6c are connected in series to form a third series circuit. In the second three-phase circuit 42, the first series circuit is provided on the isolation transformer 43 side; the third series circuit is provided on the high-voltage battery 50 side; the second series circuit is provided between the first series circuit and the third series circuit; and the first, second, and third series circuits are connected in parallel.

The second three-phase circuit 42 is connected to the isolation transformer 43, the high-voltage battery 50, and the controller 80. The controller 80 controls the FETs Q1c to Q6c of the second three-phase circuit 42 between on and off. During the charging, the second three-phase circuit 42 converts the AC power supplied through the isolation transformer 43 into DC power, and outputs the DC power to the high-voltage battery 50. In contrast, during the AC power supply, the second three-phase circuit 42 converts DC power output from the high-voltage battery 50 into AC power, and outputs the AC power to the isolation transformer 43.

The isolation transformer 43 converts a voltage. The isolation transformer 43 is provided between the first three-phase circuit 41 and the second three-phase circuit 42, and transforms the voltage of the power supplied through the first three-phase circuit 41 or the second three-phase circuit 42. The isolation transformer 43 includes three coil units 43a to 43c. The coil unit 43a includes primary winding L1a, main secondary winding L2a, and sub-secondary winding L3a. The primary winding L1a is connected to one of the phases of the first three-phase circuit 41. The primary winding L1a is, for example, connected at one end thereof to a line between the FET Q1b and the FET Q2b (first phase) of the first three-phase circuit 41 through the coil L1d, and connected at the other end thereof to the other end of primary winding L1b through a capacitor C1d and to the other end of primary winding L1c through a capacitor C3d.

The main secondary winding L2a is electromagnetically coupled to the primary winding L1a, and is connected to one of the phases of the second three-phase circuit 42. The main secondary winding L2a is, for example, connected at one end thereof to a line between the FETs Q1c and Q2c (first phase) of the second three-phase circuit 42 through the coil L4d, and connected at the other end thereof to the other end of main secondary winding L2b through a capacitor C4d and to the other end of main secondary winding L2c through a capacitor C6d.

The sub-secondary winding L3a is electromagnetically coupled to the primary winding L1a and the main secondary winding L2a, and is connected to the sub-DC/DC converter 60. The sub-secondary winding L3a is, for example, connected at one end thereof to a line between a diode D1 and a diode D2 of a rectifier circuit 61 (to be described later), and connected at the other end thereof to a line between a diode D3 and a diode D4 of the rectifier circuit 61.

In the same way, the coil unit 43b includes the primary winding L1b, the main secondary winding L2b, and sub-secondary winding L3b. The primary winding L1b is connected to one of the phases of the first three-phase circuit 41. The primary winding L1b is, for example, connected at one end thereof to a line between the FET Q3b and the FET Q4b (second phase) of the first three-phase circuit 41 through the coil L2d, and connected at the other end thereof to the other end of primary winding L1a through the capacitor C1d and to the other end of the primary winding L1c through a capacitor C2d.

The main secondary winding L2b is electromagnetically coupled to the primary winding L1b, and is connected to one of the phases of the second three-phase circuit 42. The main secondary winding L2b is, for example, connected at one end thereof to a line between the FETs Q3c and Q4c (second phase) of the second three-phase circuit 42 through the coil L5d, and connected at the other end thereof to the other end of main secondary winding L2a through the capacitor C4d and to the other end of main secondary winding L2c through a capacitor C5d.

The sub-secondary winding L3b is electromagnetically coupled to the primary winding L1b and the main secondary winding L2b, and is connected to the sub-DC/DC converter 60. The sub-secondary winding L3b is, for example, connected at one end thereof to the line between the diode D3 and the diode D4 of the rectifier circuit 61, and connected at the other end thereof to a line between a diode D5 and a diode D6 of the rectifier circuit 61.

In the same way, the coil unit 43c includes the primary winding L1c, the main secondary winding L2c, and sub-secondary winding L3c. The primary winding L1c is connected to one of the phases of the first three-phase circuit 41. The primary winding L1c is, for example, connected at one end thereof to a line between the FET Q5b and the FET Q6b (third phase) of the first three-phase circuit 41 through the coil L3d, and connected at the other end thereof to the other end of primary winding L1b through the capacitor C2d and to the other end of the primary winding L1a through the capacitor C3d.

The main secondary winding L2c is electromagnetically coupled to the primary winding L1c, and is connected to one of the phases of the second three-phase circuit 42. The main secondary winding L2c is, for example, connected at one end thereof to a line between the FETs Q5c and Q6c (third phase) of the second three-phase circuit 42 through the coil L6d, and connected at the other end thereof to the other end of main secondary winding L2b through the capacitor C5d and to the other end of main secondary winding L2a through the capacitor C6d.

The sub-secondary winding L3c is electromagnetically coupled to the primary winding L1c and the main secondary winding L2c, and is connected to the sub-DC/DC converter 60. The sub-secondary winding L3c is, for example, connected at one end thereof to the line between the diode D5 and the diode D6 (third phase) of the rectifier circuit 61, and connected at the other end thereof to the line between the diode D1 and the diode D2 of the rectifier circuit 61.

During the charging, the isolation transformer 43 increases the voltage of the AC power output from the first three-phase circuit 41, and outputs the AC power increased in voltage to the second three-phase circuit 42. In contrast, during the AC power supply, the isolation transformer 43 reduces the voltage of the AC power output from the second three-phase circuit 42, and outputs the AC power reduced in voltage to the first three-phase circuit 41.

The high-voltage battery 50 is a storage battery capable of storing the DC power. The high-voltage battery 50 includes a plurality of battery cells. Each of the battery cells is constituted by a chargeable and dischargeable secondary cell, for example, by a lithium-ion battery. The battery cells are arranged side by side, and are connected in series between adjacent battery cells. The high-voltage battery 50 has a voltage of, for example, roughly 200 V to 500 V. The high-voltage battery 50 stores the DC power transformed by the main DC/DC converter 40 during the charging, and supplies the DC power to the main DC/DC converter 40 during the AC power supply. The high-voltage battery 50 supplies the power to a high-voltage power supply system including, for example, an inverter and a motor-generator.

The sub-DC/DC converter 60 converts the voltage of the DC power. The sub-DC/DC converter 60 branches from the isolation transformer 43, and transforms the voltage of the three-phase AC power supplied through the first three-phase circuit 41 or the second three-phase circuit 42. The sub-DC/DC converter 60 includes the rectifier circuit 61 and the step-down circuit 62. The rectifier circuit 61 rectifies the three-phase AC power into DC power. The rectifier circuit 61 includes the diodes D1 to D6. In the rectifier circuit 61, the diode D1 and the diode D2 are connected in series along the forward direction to form a first series circuit; the diode D3 and the diode D4 are connected in series along the forward direction to form a second series circuit; and the diode D5 and the diode D6 are connected in series along the forward direction to form a third series circuit. In the rectifier circuit 61, the first series circuit is provided on the isolation transformer 43 side; the third series circuit is provided on the step-down circuit 62 side; the second series circuit is provided between the first series circuit and the third series circuit; and the first, second, and third series circuits are connected in parallel. As described above, the rectifier circuit 61 is connected to the sub-secondary winding L3a, L3b, and L3c of the isolation transformer 43. The rectifier circuit 61 rectifies the three-phase AC power output from the sub-secondary winding L3a, L3b, and L3c into the DC power. In this way, the rectifier circuit 61 receives the three-phase AC power in which ripples have been canceled out, and therefore can perform the rectification processing on the stable power. The rectifier circuit 61 is connected to the step-down circuit 62, and outputs the rectified DC power to the step-down circuit 62. The rectifier circuit 61 may perform synchronous rectification using switching elements, instead of performing the rectification using the diodes D1 to D6. A smoothing capacitor C1c is provided between the rectifier circuit 61 and the step-down circuit 62.

The step-down circuit 62 is a step-down chopper circuit that reduces a voltage. The step-down circuit 62 includes a switching circuit 62a including three switching elements that conduct or shut off currents, a diode unit 62b including three diodes, and a coil unit 62c including three coils that output currents through the diode unit 62b in response to operations of the switching circuit 62a. The step-down circuit 62 reduces the voltage of the DC power rectified by the rectifier circuit 61, and outputs the DC power reduced in voltage to the low-voltage battery 70. A smoothing capacitor C2c is provided between the step-down circuit 62 and the low-voltage battery 70.

The low-voltage battery 70 is a storage battery capable of storing the DC power. The low-voltage battery 70 is constituted by, for example, a lithium-ion battery. The low-voltage battery 70 has a voltage of, for example, roughly 12 V to 48 V. The low-voltage battery 70 stores the DC power reduced in voltage by the sub-DC/DC converter 60. The low-voltage battery 70 supplies power to a 12-volt power supply system having a lower voltage than that of the high-voltage power supply system.

The controller 80 controls the conversion circuit 30, the main DC/DC converter 40, and the sub-DC/DC converter 60. The controller 80 is connected to, for example, the current sensor 21a, the voltage sensor 22a, and the switching circuit 31 of the conversion circuit 30, and controls the switching circuit 31 of the conversion circuit 30 based on detection results of the current sensor 21a and the voltage sensor 22a. The controller 80 is connected to, for example, the current sensor 21b, the voltage sensor 22b, and the first three-phase circuit 41 and the second three-phase circuit 42 of the main DC/DC converter 40, and performs interleaved control of the first three-phase circuit 41 and the second three-phase circuit 42 based on detection results of the current sensor 21b and the voltage sensor 22b. The term "interleaved control" refers to control of reducing the noise by canceling out the ripples using the three-phase alternating current in which the current and voltage phases are offset from one another by 120 degrees. The controller 80 is connected to the current sensor 21c, the voltage sensor 22c, and the step-down circuit 62 of the sub-DC/DC converter 60, and controls the step-down circuit 62 based on detection results of the current sensor 21c and the voltage sensor 22c.

The following describes operation examples of the power conversion device 1. FIG. 2 is a circuit diagram illustrating a charging example of the power conversion device 1 according to the embodiment. As illustrated, for example, in FIG. 2, during the charging, the conversion circuit 30 of the power conversion device 1 converts the AC power supplied from the AC power supply 2 into the DC power, and outputs the converted DC power to the main DC/DC converter 40. The main DC/DC converter 40 increases the voltage of the DC power output from the conversion circuit 30, and outputs the DC power increased in voltage to the high-voltage battery 50. During the charging, the main DC/DC converter 40 outputs the three-phase AC power to the sub-DC/DC converter 60 branching from the isolation transformer 43. The sub-DC/DC converter 60 converts the three-phase AC power output from the main DC/DC converter 40 into the DC power, and reduces the voltage of the converted DC power. The sub-DC/DC converter 60 outputs the DC power reduced in voltage to the low-voltage battery 70.

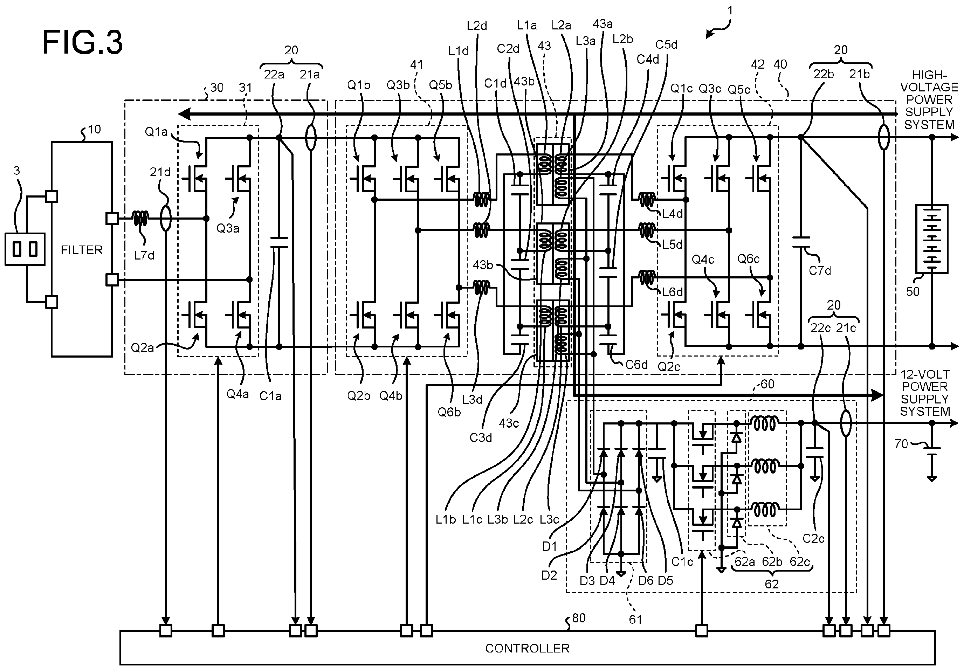

FIG. 3 is a circuit diagram illustrating an AC power supply example of the power conversion device 1 according to the embodiment. As illustrated, for example, in FIG. 3, during the AC power supply, the main DC/DC converter 40 of the power conversion device 1 reduces the voltage of the DC power supplied from the high-voltage battery 50, and outputs the DC power reduced in voltage to the conversion circuit 30. The conversion circuit 30 converts the DC power output from the main DC/DC converter 40 into the AC power, and outputs the converted AC power to the load unit 3 through the filter 10. During the AC power supply, the main DC/DC converter 40 outputs the three-phase AC power to the sub-DC/DC converter 60 branching from the isolation transformer 43. The sub-DC/DC converter 60 rectifies the three-phase AC power output from the main DC/DC converter 40 into the DC power, and reduces the voltage of the rectified DC power. The sub-DC/DC converter 60 outputs the DC power reduced in voltage to the low-voltage battery 70.

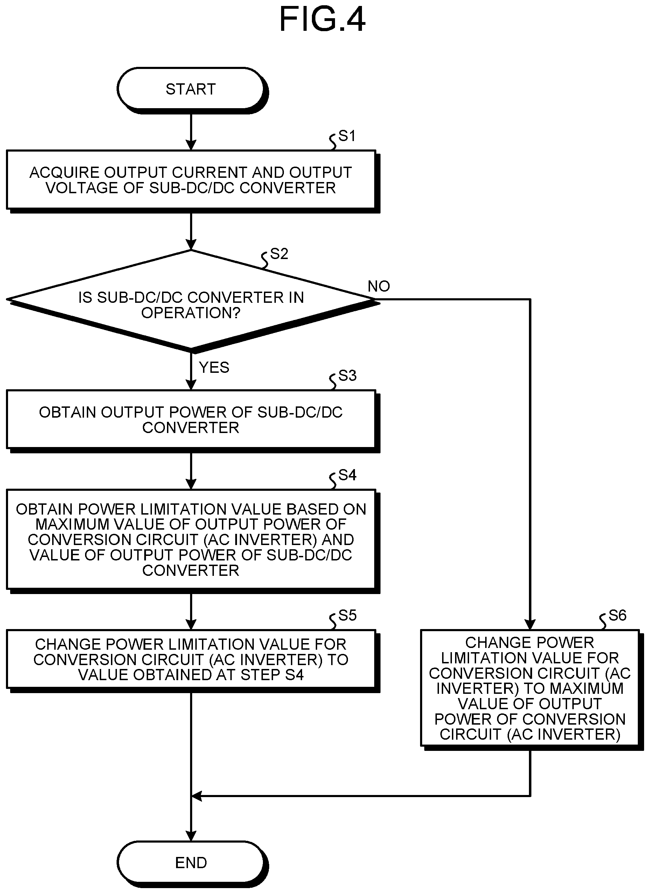

The following describes an output power limitation example during the AC power supply. FIG. 4 is a flowchart illustrating the power limitation example during the AC power supply according to the embodiment. As illustrated in FIG. 4, the controller 80 of the power conversion device 1 acquires an output current and an output voltage of the sub-DC/DC converter 60 from the current sensor 21c and the voltage sensor 22c (Step S1). The controller 80 then determines whether the sub-DC/DC converter 60 is in operation (Step S2). When the sub-DC/DC converter 60 is in operation (Yes at Step S2), the controller 80 obtains output power of the sub-DC/DC converter 60 (Step S3). The controller 80 obtains the output power of the sub-DC/DC converter 60, for example, based on the output current and the output voltage of the sub-DC/DC converter 60 acquired at Step S1 described above.

The controller 80 then obtains a power limitation value for the conversion circuit 30 based on a predetermined maximum value of output power of the conversion circuit (AC inverter) 30 and the value of the output power of the sub-DC/DC converter 60 obtained at Step S3 described above (Step S4). The controller 80 obtains the power limitation value for the conversion circuit 30, for example, by subtracting the value of the output power of the sub-DC/DC converter 60 obtained at Step S3 described above from the maximum value of the output power of the conversion circuit 30. The controller 80 changes the power limitation value for the conversion circuit 30 to the power limitation value obtained at Step S4 described above (Step S5). During the AC power supply, the controller 80 controls the conversion circuit 30 based on the changed power limitation value to limit the AC power output from the conversion circuit 30 to power having the power limitation value. If, at Step S2 described above, the sub-DC/DC converter 60 is not in operation (No at Step S2), the controller 80 changes the power limitation value for the conversion circuit (AC inverter) 30 to the maximum value of the output power of the conversion circuit (AC inverter) 30 (Step S6).

As described above, the power conversion device 1 is mounted on the vehicle, and is provided with the main DC/DC converter 40 and the sub-DC/DC converter 60. The main DC/DC converter 40 includes the first three-phase circuit 41 capable of receiving and outputting the three-phase alternating current, the second three-phase circuit 42 capable of receiving and outputting the three-phase alternating current, and the isolation transformer 43. The sub-DC/DC converter 60 branches from the isolation transformer 43, and transforms the voltage of the power supplied through the first three-phase circuit 41 or the second three-phase circuit 42. The isolation transformer 43 is provided between the first three-phase circuit 41 and the second three-phase circuit 42, and transforms the voltage of the power supplied through the first three-phase circuit 41 or the second three-phase circuit 42. The isolation transformer 43 includes the three coil units 43a to 43c. The coil unit 43a (43b, 43c) includes the primary winding L1a (L1b, L1c), the main secondary winding L2a (L2b, L2c), and the sub-secondary winding L3a (L3b, L3c). The primary winding L1a (L1b, L1c) is connected to one of the phases of the first three-phase circuit 41. The main secondary winding L2a (L2b, L2c) is electromagnetically coupled to the primary winding L1a (L1b, L1c), and is connected to one of the phases of the second three-phase circuit 42. The sub-secondary winding L3a (L3b, L3c) is electromagnetically coupled to the primary winding L1a (L1b, L1c) or the main secondary winding L2a (L2b, L2c), and is connected to the sub-DC/DC converter 60. The coil units 43a to 43c are provided in the three phases, at least one for each phase.

With the above-described configuration, the power conversion device 1 can perform the interleaved control of the first three-phase circuit 41 and the second three-phase circuit 42 of the main DC/DC converter 40 so as to cancel out the ripples of the three-phase alternating current to reduce the noise. Accordingly, the power conversion device 1 can reduce the ripples supplied to the sub-DC/DC converter 60, and thus can supply the stable power from the sub-DC/DC converter 60 to the low-voltage battery 70. In the power conversion device 1, the isolation transformer 43 can be used as the transformer for the in-vehicle charger, the DC/DC converters, and the AC inverter. Accordingly, the power conversion device 1 can restrain an increase in size of the device, and can reduce the manufacturing cost. The power conversion device 1 is provided with the sub-DC/DC converter 60, and thereby can reduce a drop in amount of charge of the low-voltage battery 70 during the charging and during the AC power supply. In the power conversion device 1, since the sub-DC/DC converter 60 branches from the isolation transformer 43 by way of the sub-secondary winding L3a (L3b, L3c), a switching relay or the like is not required, and the number of parts can be reduced. As a result, the power conversion device 1 can appropriately supply a plurality of kinds of power having different voltages.

The power conversion device 1 described above is provided with the conversion circuit 30 and the high-voltage battery 50. The conversion circuit 30 outputs the DC power converted from the AC power supplied from the AC power supply 2 to the main DC/DC converter 40. The high-voltage battery 50 stores the DC power transformed by the main DC/DC converter 40. This configuration allows the power conversion device 1 to charge the high-voltage battery 50 using the main DC/DC converter 40, and to charge the low-voltage battery 70 using the sub-DC/DC converter 60.

In the power conversion device 1 described above, during the AC power supply, the high-voltage battery 50 supplies the DC power to the main DC/DC converter 40. The conversion circuit 30 outputs the AC power converted from the DC power transformed by the main DC/DC converter 40 to the load unit 3. This configuration allows the power conversion device 1 to supply the AC power to the load unit 3 using the main DC/DC converter 40 and the conversion circuit 30, and to charge the low-voltage battery 70 using the sub-DC/DC converter 60.

The power conversion device 1 described above is provided with the controller 80 that controls the conversion circuit 30 and the sub-DC/DC converter 60. The controller 80 limits the output power output from the conversion circuit 30 to the load unit 3 based on the maximum value of the output power output from the conversion circuit 30 to the load unit 3 and the output power actually output from the sub-DC/DC converter 60. This configuration allows the power conversion device 1 to perform the AC supply to the load unit 3 according to the charging power to the low-voltage battery 70. For example, the power conversion device 1 relatively reduces the power of the AC supply to the load unit 3 when the charging power to the low-voltage battery 70 is relatively high, and relatively increases the power of the AC supply to the load unit 3 when the charging power to the low-voltage battery 70 is relatively low. Accordingly, the power conversion device 1 can appropriately supply the power to the load unit 3 while ensuring the charging power to the low-voltage battery 70.

### Modification

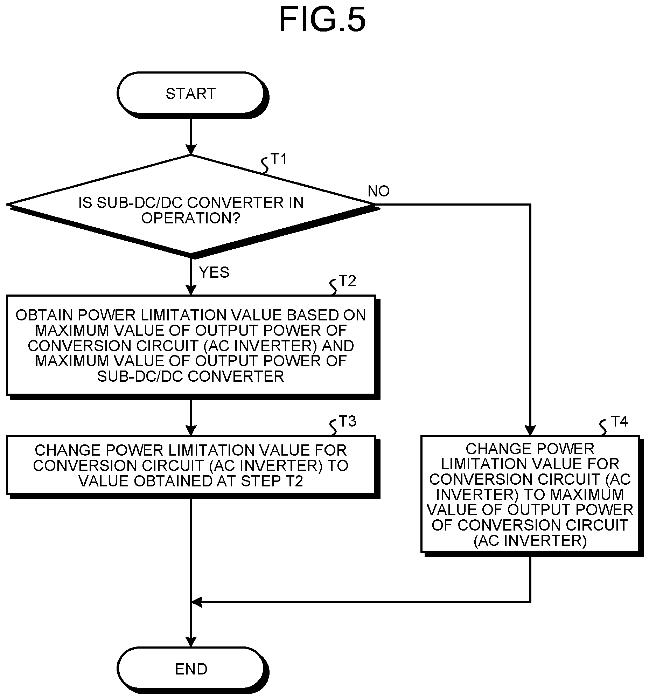

The following describes a modification of the embodiment. FIG. 5 is a flowchart illustrating a power limitation example during the AC power supply according to the modification of the embodiment. The example illustrated in FIG. 5 differs from the embodiment in that the power limitation value is obtained based on the maximum value of the output power of the sub-DC/DC converter 60. As illustrated in FIG. 5, the controller 80 of the power conversion device 1 determines whether the sub-DC/DC converter 60 is in operation (Step T1). When the sub-DC/DC converter 60 is in operation (Yes at Step T1), the controller 80 obtains the power limitation value based on the predetermined maximum value of the output power of the conversion circuit (AC inverter) 30 and the predetermined maximum value of the output power of the sub-DC/DC converter 60 (Step T2). The controller 80 obtains the power limitation value for the conversion circuit 30, for example, by subtracting the maximum value of the output power of the sub-DC/DC converter 60 from the maximum value of the output power of the conversion circuit 30. The controller 80 changes the power limitation value for the conversion circuit (AC inverter) 30 to the power limitation value obtained at Step T2 described above (Step T3). During the AC power supply, the controller 80 controls the conversion circuit 30 based on the changed power limitation value to limit the AC power output from the conversion circuit 30 to power having the power limitation value. If, at Step T1 described above, the sub-DC/DC converter 60 is not in operation (No at Step T1), the controller 80 changes the power limitation value for the conversion circuit (AC inverter) 30 to the maximum value of the output power of the conversion circuit (AC inverter) 30 (Step T4).

As described above, in the power conversion device 1 described above, the controller 80 limits the output power output from the conversion circuit 30 to the load unit 3 based on the maximum value of the output power that is the power output from the conversion circuit 30 to the load unit 3 and the maximum value of the output power of the sub-DC/DC converter 60. This configuration allows the power conversion device 1 to perform the AC power supply to the load unit 3 while ensuring the maximum value of the charging power to the low-voltage battery 70. Accordingly, the power conversion device 1 can charge the low-voltage battery 70 while stably performing the AC power supply to the load unit 3 even when the charging power to the low-voltage battery 70 has reached the maximum during the AC power supply to the load unit 3.

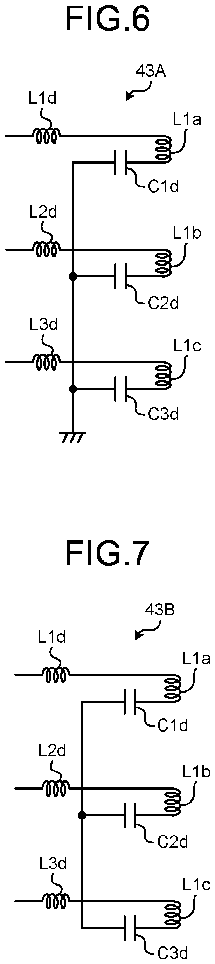

FIG. 6 is a circuit diagram illustrating an isolation transformer 43A according to the modification of the embodiment. The isolation transformer 43A differs from the isolation transformer 43 according to the embodiment in the connection of the primary winding L1a to L1c to the resonant circuit. As illustrated, for example, in FIG. 6, in the isolation transformer 43A, the primary winding L1a is connected at one end thereof to the line between the FET Q1b and the FET Q2b of the first three-phase circuit 41 through the resonance coil L1d, and connected at the other end thereof to a ground through the resonance capacitor C1d; the primary winding L1b is connected at one end thereof to the line between the FET Q3b and the FET Q4b of the first three-phase circuit 41 through the resonance coil L2d, and connected at the other end thereof to the ground through the resonance capacitor C2d; and the primary winding L1c is connected at one end thereof to the line between the FET Q5b and the FET Q6b of the first three-phase circuit 41 through the resonance coil L3d, and connected at the other end thereof to the ground through the resonance capacitor C3d. In this way, the primary winding L1a to L1c of the isolation transformer 43A is connected to the resonant circuit.

FIG. 7 is a circuit diagram illustrating an isolation transformer 43B according to the modification of the embodiment. The isolation transformer 43B differs from the isolation transformer 43 according to the embodiment in the connection of the primary winding L1a to L1c to the resonant circuit. As illustrated, for example, in FIG. 7, in the isolation transformer 43B, the primary winding L1a is connected at one end thereof to the line between the FET Q1b and the FET Q2b of the first three-phase circuit 41 through the resonance coil L1d, and connected at the other end thereof to the other end of the primary winding L1b and the other end of the primary winding L1c through the resonance capacitor C1d; the primary winding L1b is connected at one end thereof to the line between the FET Q3b and the FET Q4b of the first three-phase circuit 41 through the resonance coil L2d, and connected at the other end thereof to the other end of the primary winding L1a and the other end of the primary winding L1c through the resonance capacitor C2d; and the primary winding L1c is connected at one end thereof to the line between the FET Q5b and the FET Q6b of the first three-phase circuit 41 through the resonance coil L3d, and connected at the other end thereof to the other end of the primary winding L1a and the other end of the primary winding L1b through the resonance capacitor C3d. In this way, the primary winding L1a to L1c of the isolation transformer 43B is connected to the resonant circuit.

In the description above, the example has been described in which the AC/DC circuit and the inverter circuit of the power conversion device 1 are constituted by the same conversion circuit 30. The power conversion device 1 is, however, not limited to this example. The AC/DC circuit and the inverter circuit of the power conversion device 1 may be constituted by different circuits from each other.

Although the example has been described in which the power conversion device 1 is capable of performing both the charging and the AC power supply, the power conversion device 1 is not limited to this example. The power conversion device 1 may perform, for example, only either one of the charging and the AC power supply.

Although the example has been described in which the power conversion device 1 charges both the high-voltage battery 50 and the low-voltage battery 70 during the charging, the power conversion device 1 is not limited to this example. For example, during the charging, the power conversion device 1 may charge the high-voltage battery 50 while not charging the low-voltage battery 70.

Although the example has been described in which the power conversion device 1 supplies the power to the load unit 3 and charges the low-voltage battery 70 during the AC power supply, the power conversion device 1 is not limited to this example. For example, during the AC power supply, the power conversion device 1 may supply the power to the load unit 3 while not charging the low-voltage battery 70.

The power conversion device 1 may use the power supplied from the high-voltage battery 50 to charge the low-voltage battery 70 during a period other than the charging period and the AC power supply period.

Although the example has been described in which the power conversion device 1 is provided with the conversion circuit 30 and the high-voltage battery 50, the power conversion device 1 is not limited to this example, and need not be provided with the conversion circuit 30 and the high-voltage battery 50.

Although the example has been described in which the power conversion device 1 limits the output power output from the conversion circuit 30 to the load unit 3, the power conversion device 1 is not limited to this example, and need not limit the output power output from the conversion circuit 30 to the load unit 3.

Although the example has been described in which the sub-DC/DC converter 60 is provided with the step-down circuit 62, the sub-DC/DC converter 60 is not limited to this example, and may be provided with a step-up circuit or a step-up/down circuit instead of the step-down circuit 62.

The power conversion device according to the embodiment is provided with the sub-DC/DC converter branching from the isolation transformer of the main DC/DC converter capable of receiving and outputting the three-phase alternating current, and therefore can reduce the ripples of the power supplied to the sub-DC/DC converter and can appropriately supply a plurality of kinds of power having different voltages.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A power conversion device (1) mounted on a vehicle and comprising:
a DC/DC converter (40) including a first three-phase circuit (41) capable of receiving and outputting a three-phase alternating current, a second three-phase circuit (42) capable of receiving and outputting a three-phase alternating current, and an isolation transformer (43) provided between the first three-phase circuit (41) and the second three-phase circuit (42), and configured to transform a voltage of power supplied through the first three-phase circuit (41) or the second three-phase circuit (42); and
a sub-DC/DC converter (60) branching from the isolation transformer (43), and configured to transform the voltage of the power supplied through the first three-phase circuit (41) or the second three-phase circuit (42), wherein
the isolation transformer (43) includes three coil units (43a, 43b, 43c) each having
a primary winding (L1a, L1b, L1c) connected to one of phases of the first three-phase circuit (41),
a main secondary winding (L2a, L2b, L2c) electromagnetically coupled to the primary winding (L1a, L1b, L1c), and connected to one of phases of the second three-phase circuit (42), and
a sub secondary winding (L3a, L3b, L3c) electromagnetically coupled to the primary winding (L1a, L1b, L1c) or the main secondary winding (L2a, L2b, L2c), and connected to the sub-DC/DC converter (60), and
the coil units (43a, 43b, 43c) are provided in the three phases, at least one for each phase.

2. The power conversion device (1) according to claim 1, further comprising:
an AC/DC circuit (30) configured to output, to the main DC/DC converter (40), a direct current power converted from an alternating current power supplied from an alternating current power supply (2); and
a power storage unit (50) configured to store the direct current power transformed by the main DC/DC converter (40).

3. The power conversion device (1) according to claim 1 or 2, further comprising:
a power storage unit (50) configured to store a direct current power and supply the direct current power to the main DC/DC converter (40); and
an inverter circuit (30) configured to output, to a load unit, an alternating current power converted from the direct current power transformed by the main DC/DC converter (40).

4. The power conversion device (1) according to claim 3, further comprising:
a controller (80) configured to control the inverter circuit (30) and the sub-DC/DC converter (60), wherein
the controller (80) is configured to limit output power output from the inverter circuit (30) to the load unit based on a maximum value of the output power and an output value of the sub-DC/DC converter (60).
